# EUROPEAN PATENT SPECIFICATION

(11) **EP 1 116 643 B1**
(45) Date of publication and mention of the grant of the patent: **12.05.2004**
(21) Application number: 01200075.8
(22) Date of filing: 11.01.2001
(51) Int. Cl.: B62D 53/08, B62D 47/02, B61D 3/10

(54) **Coupling device for a trailer**
Kupplungseinrichtung für Anhänger
Dispositif d'attelage pour remorque

(30) Priority: 13.01.2000 NL 1014074
(43) Date of publication of application: 18.07.2001
(60) Divisional application: 03077128.1
(73) Proprietor: Transport Industry Development Centre B.V., 5692 GA Son en Breugel (NL)
(72) Inventor: Van Genugten, Antonius Jacobus, 5298 VK Liempde (NL)
(74) Representative: Dorna, Peter

(56) References cited:
- DE-A- 4 329 702
- DE-C- 848 750
- FR-A- 2 348 092

## Description

The present invention relates to a coupling device for a trailer having steerable wheels, wherein the coupling device includes a coupling plate which is rotatable about the central axis of a coupling pin, which coupling plate is supported by a frame to be fixed to the trailer and which includes a driver element intended for cooperation with a part of a tractive unit by means of which the trailer can be moved, in such a manner that the coupling plate rotates along with the tractive unit upon rotation of the tractive unit and the trailer relative to each other about the central axis of the coupling pin. Such a coupling device has been marketed by the applicant prior to the priority date of the present application.

The rotatable coupling plate of a trailer fitted with such a coupling device will be coupled to a steering mechanism for the steerable wheels. When a combination of such a trailer and a tractive unit moving the trailer is taking a bend, a relative rotation about the central axis of the coupling pin will take place between the tractive unit and the trailer. When such a relative rotation between the trailer and the tractive unit takes place, the coupling plate will rotate along with the tractive unit with respect to the trailer, thus pivoting the steerable wheels with respect to the chassis of the trailer via the steering mechanism. Said steerable wheels may be wheels which are each pivotable about an upwardly extending axis with respect to the chassis of the trailer, or wheels which are mounted on the ends of an axle which is pivotable about an upwardly extending axis with respect to the chassis of the trailer.

Prior art coupling devices of the above kind have a row of balls mounted on the coupling plate, which balls are retained between the coupling plate and a part of the frame extending over said row of balls. This leads to a coupling device construction which is comparatively high, which may present difficulties when attempting to build the coupling device into the trailer chassis in the most efficient manner. Another drawback is the fact that comparatively many parts are required for manufacturing the coupling device.

According to the invention, the coupling plate is provided near its circumference with a groove that extends concentrically about the central axis of the coupling pin, which groove is surrounded by a groove formed in the frame, which extends concentrically about the central axis of the coupling pin, in such a manner that said grooves form a circumferential chamber, which accommodates the balls that connect the coupling plate and the frame.

By using the construction according to the invention a coupling device can be obtained that may be built up of a single frame and a coupling plate accommodated therein with the balls that connect the two parts. It is possible thereby to realise a low overall height of the coupling device, whilst it is at the same time possible to achieve a considerable weight saving in comparison with the prior art construction. In addition to that the need to use bolts in the construction, which incorporate the inherent risk of vibrating loose, is at least considerably reduced or even excluded.

In an efficient embodiment the frame and the coupling plate are castings, which enables low-cost production of said parts.

A very advantageous embodiment of the invention is obtained by a coupling device wherein a stud is fixed to the coupling plate in a point some distance away from the central axis of the coupling pin, about which an eye that forms part of a steering mechanism for the steerable wheels is rotatable, characterized in that said eye is fixed to the mounting plate by means of a bolt, which is accessible from the underside of the coupling device when said coupling device is mounted on a trailer. Such a method of fixing the eye to the coupling plate is advantageous with all coupling devices as described in the introduction. It is not strictly necessary thereby to use the above-described circular chamber and all the aspects thereof in order to obtain the advantages. The advantages consist in particular of the fact that maintenance can take place via the underside of the coupling device, independently of the type of trailer.

The invention will now be explained in more detail by means of a possible embodiment of the coupling device according to the invention as shown in the accompanying figures.

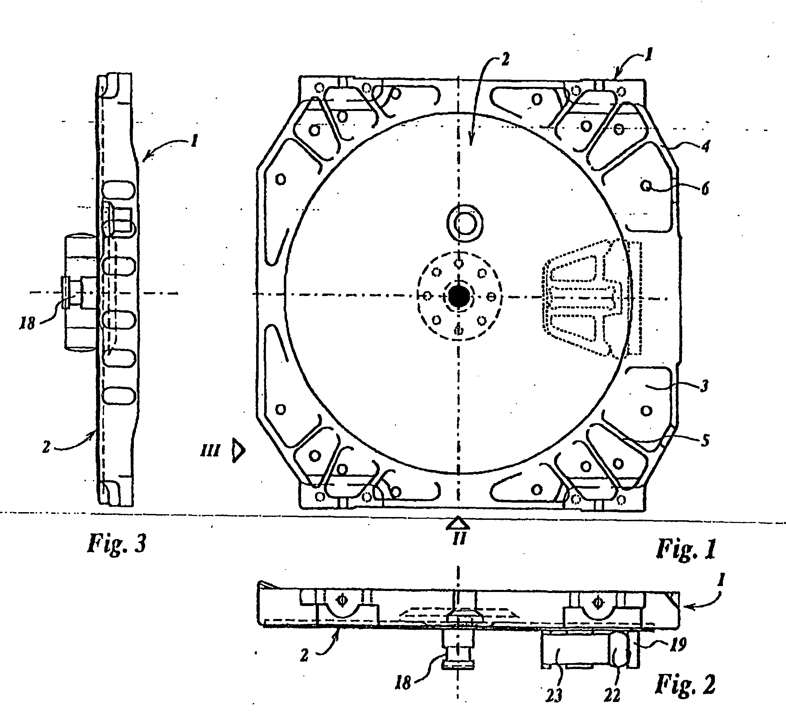

Figure 1 is a top plan view of a coupling device according to the invention.
Figure 2 is a side elevation of Figure 1, seen in the direction indicated by arrow II in Figure 1.
Figure 3 is a side elevation of Figure 1, seen in the direction indicated by arrow III in Figure 1.
Figure 4 is a bottom plan view of the coupling device of Figure 1, from which a few parts have been left out.
Figure 5 is a sectional view of the frame and of the rotatable coupling plate that is bearing-mounted in said frame.
Figure 6 is a larger-scale view of the right-hand part of Figure 5.
Figure 7 is an upside-down sectional view of the coupling of a coupling rod forming part of the steering mechanism for the steerable wheels.
Figure 8 is a sectional view corresponding to Figure 6 of an alternative embodiment.
Figure 9 is a sectional view comparable to Figure 8 of a second alternative embodiment.
Figure 10 is a sectional view corresponding to Figure 9 of a third alternative embodiment.

The coupling device that is shown in the figures comprises a frame 1 and a coupling plate 2 rotatably supported in said frame.

The frame 1, which has been cast from a suitable cast iron, has a substantially square outer circumference with bevelled corners. Frame 1 is built up in the main of a body 3 bounding a circular opening, which is circumferentially provided with a flange 4. The connection between body 3 and flange 4 is strengthened by means of ribs 5. Frame 1 is furthermore provided with holes 6 for the passage of bolts, by means of which the frame can be secured to the chassis (not shown) of a trailer.

A circumferential groove 7 of V-shaped section is formed in the wall of frame 1 that surrounds the circular opening bounded by the frame, wherein the two boundary surfaces 8 and 9 of said groove extend perpendicularly away from each other from a horizontal centre plane of he groove.

The rotatable coupling plate 2 comprises a disc-shaped part 10, the underside of which has been machined to bear on the coupling mounted on a tractive unit. Rotatable coupling plate 2 is provided with an upright round collar or flange 11, which is spaced from the outer circumference of said disc-shaped part 10 by some distance. The connection between disc 10 and flange 11 is strengthened by means of strengthening ribs 12.

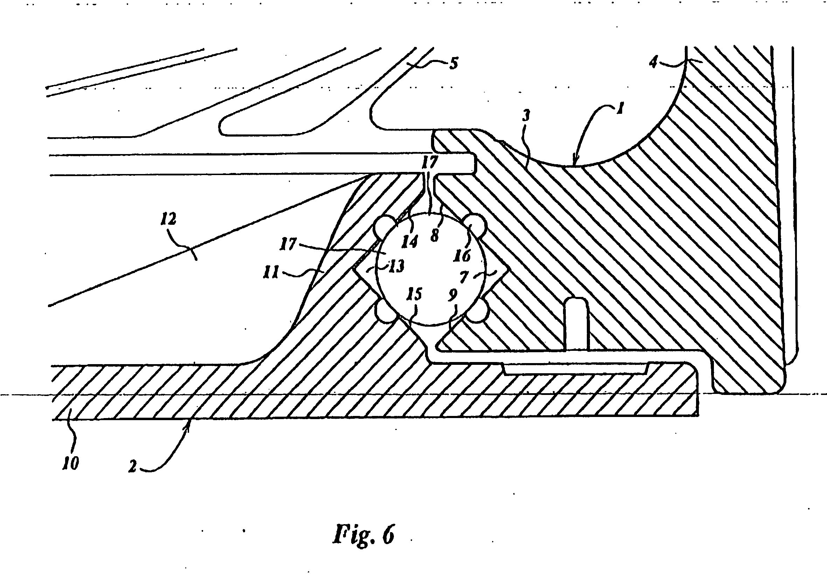

As will be apparent in particular from Figure 6, a circumferential groove 13 of V-shaped section is also formed in the outer circumference of upright collar 11, wherein the boundary surfaces 14 and 15 extending perpendicularly to each other extend obliquely away from each other from a horizontal centre plane in which both the top of the recess 13 and the top of recess 7 are located.

Circumferential grooves may be formed in the boundary surfaces 8, 9, 14 and 15, into which rings 16 made of a hard material, for example hardened steel, can be placed. In that case said rings 16 form the contact surfaces for balls 17, which are present in the circular chamber formed by recesses 7 and 13. It will be understood that the construction is such that the outer circumference of collar 11 is disposed some distance away from the wall portion of frame 1 that surrounds the circular opening that is formed in the frame, so as to enable free rotation of the coupling plate 2 in frame 1. Since the disc-shaped part 10 of the coupling plate extends beyond the chamber formed by grooves 7 and 13 in which the balls 17 are accommodated, seen from the centre of coupling plate 2, a certain degree of screening of said chamber is effected as well.

The balls can be introduced into the chamber formed by recesses 7 and 13 through a closable opening that is locally formed in the frame and/or in the coupling plate.

It will be understood that balls 17 enable an effective connection between the frame and the coupling plate, whilst the coupling plate is readily rotatable about its central axis with respect to the frame.

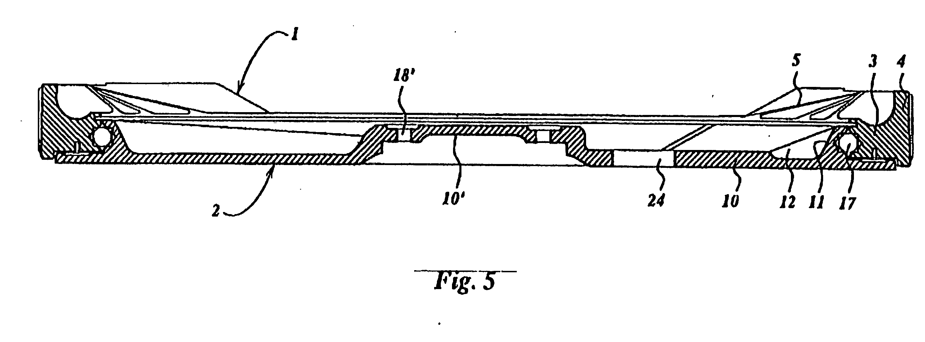

As is apparent in particular from Figure 5, the disc-shaped member includes a cup-shaped part 10' near its centre, which functions to receive the upper end of a coupling pin 18, which can be fixed to the rotatable coupling plate 2 by means of bolts to be passed through holes 18' formed in the cup-shaped part 10'. Said coupling pin 18 functions, in a manner which is known per se, to provide the connection between the coupling device that is fixed to a trailer and the coupling plate that is mounted on a tractive unit.

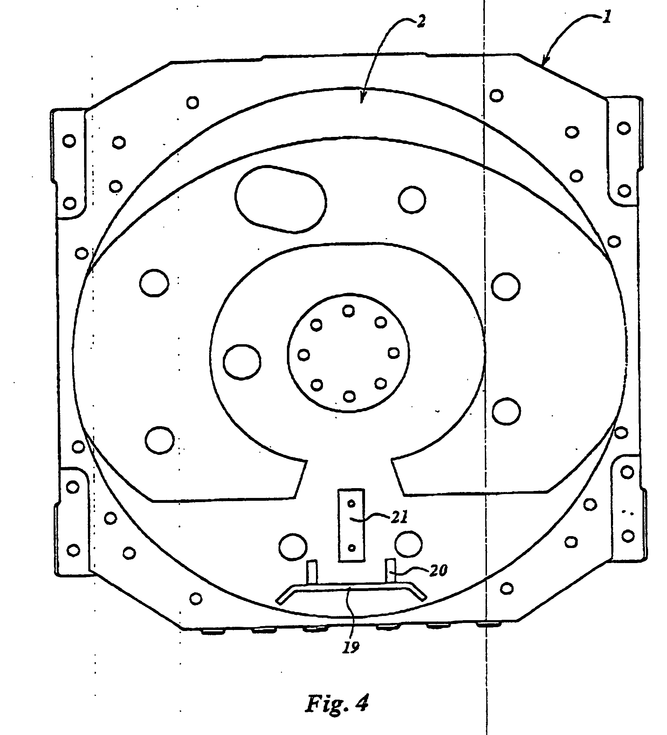

As is furthermore shown in Figure 4, an upright strip 19 is fixed to the underside of coupling plate 2, which strip has bent ends.

In the central position of the coupling plate 2, that is, the position which the coupling plate 2 occupies when a combination of a tractive unit and a trailer is driven straight ahead, strip 19 extends perpendicularly to the intended direction of movement of the combination, whilst the ends of the strip are bent rearwards, seen in the direction of movement. Two pins 20 extending parallel to each other in forward direction are connected to said strip. Furthermore a sliding plate 21 is welded to the underside of the coupling plate 19.

As is furthermore shown in particular in Figure 2, rubbers buffers 22 are passed over pins 20. Said rubber buffers 22 are disposed between the strip 19 and a trapezoidal, seen in top plan view, body 23 present on the underside of the coupling plate 2, which body is supported on the sliding plate 21 whilst being capable of slight sliding movement thereon. As is known per se, said trapezoidal body 23 is retained between two boundary walls of an opening formed in the coupling plate of the tractive unit when a trailer fitted with such a coupling device is coupled to a tractive unit. Consequently, the coupling plate 2 is rotated along with the coupling plate of the tractive unit via body 23 upon rotation of the tractive unit and the trailer relative to each other about the central axis of the coupling pin 18, for example when taking a bend. So body 23 acts as a driver element for the rotatable coupling plate.

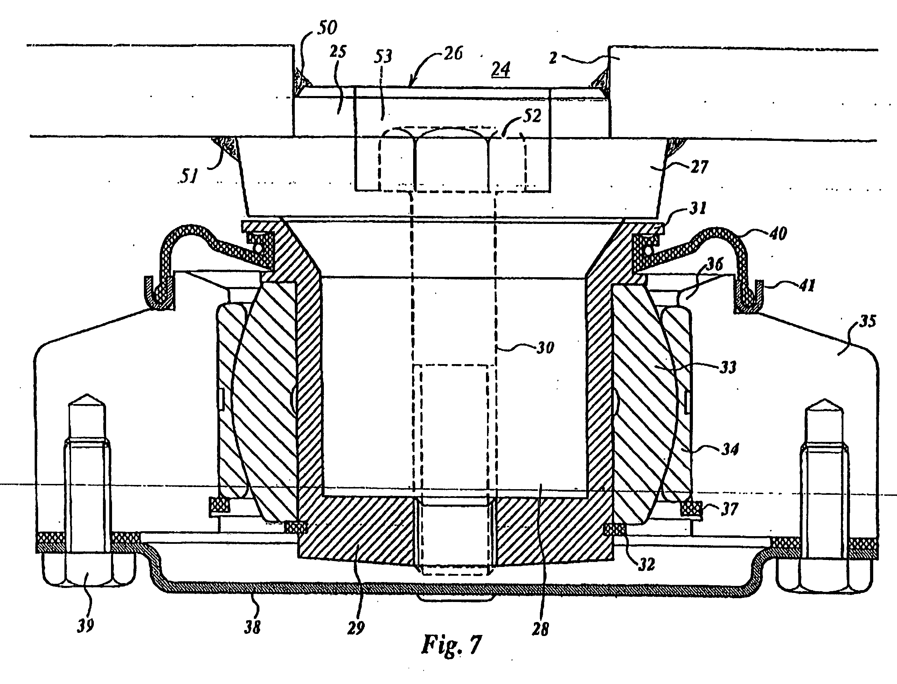

In the following description of Figure 7, relative concepts such as up and down are to be interpreted as seen in the representation of Figure 7. In practice the coupling according to Figure 7 will be used upside down.

A hole 24 is formed in the coupling plate at a location some distance away from coupling pin 18, in which hole the upper end 25 of a disc 26 is accommodated (Figure 7). The lower part 27 of disc 26, which has a larger diameter than the part 25 of disc 26, abuts against the underside of coupling plate 2 thereby. Disc 26 is welded to the coupling plate by means of circumferential welds 50, 51.

A stud 28 is disposed under disc 26. Stud 28 is surrounded by a bush 29 of U-shaped section, which is secured to disc 26 together with stud 28 by means of a bolt 30 that is passed through said stud, the threaded lower part of which is screwed into a threaded hole formed in bush 29. In principle disc 26 and stud 28 may also be integral with each other. Head 52 of bolt 30 is accessible via hole 24 and recess 53 in disc 26, on the bottom of which head 52 is clamped down.

Bush 29 is provided with a shoulder 31 at its upper end. A ring 33 is retained between the lower surface of shoulder 31 and a locking ring 32 disposed in a circumferential groove formed near the lower end of the bush, which ring is connected to the bush by a press fit. As appears from Figure 7, the outer circumference of ring 33 is in the form of a circular arc, seen in sectional view.

Ring 33 is surrounded by a further ring 34, whose inner circumference is adapted to the outer circumference of ring 33. Ring 34 is capable of rotating and also, to a limited degree, reciprocating movement with respect to ring 33. Rings 33 and 34 together form a pivot bearing, therefore. Ring 34 is accommodated in a bore that is formed in an eye-shaped part 35, which is fixed to the end of a coupling rod (not shown in the figures). Ring 34 is thereby retained between a shoulder 36 projecting into the bore of the eye 35 near the upper side thereof and a locking ring 37, which is accommodated in a grooved formed in the bore in said eye. The bore formed in eye 35 is closed at the bottom side by a cover plate 38, which is secured to the eye 35 by means of bolts 29.

A circumferential groove is formed in shoulder 31, in which groove an edge of a bellows 40 consisting of a resilient material is accommodated. Said bellows extends from the groove formed in shoulder 31 over the opening formed in eye 35, and at its outer circumference it is clamped down in a U-shaped, circular, gutter-shaped member 41 mounted on eye 35. It will be apparent that the rings 33 and 34 forming bearing cups are thus protected against penetrating dirt and the like. The space between cover plate 38 and bellows 40 is permanently filled with a lubricant, so that refilling with lubricant is not necessary.

As described above, coupling plate 2 rotates about the central axis of coupling pin 18 when a combination of a tractive unit and a trailer that is fitted with a coupling device according to the invention takes a bend. It will be apparent that stud 28 thereby moves in a path that extends concentrically about the central axis of coupling pin 18, so that a coupling rod, sliding member or the like that is connected to eye 35 will more or less be moved reciprocatingly in the longitudinal direction of the combination. Such a coupling rod or sliding member will be coupled to a steering mechanism of known construction for steerable wheels of the trailer, in a manner which is known per se, or form part thereof.

As a result of the above-described coupling of the eye 35, which forms part of a sliding member, coupling rod or the like, the stud 28 and the eye 35 surrounding said stud and the coupling rod or the like connected thereto can be detached from the coupling device by unscrewing the bolt 30 which is accessible from the underside of the coupling device, and be moved out from its position between the coupling device and the part of the chassis trailer present above said coupling device. This is a significant improvement in comparison with the constructions that have been usual so far, which generally had to be detached from above, with the concomitant drawback that it was very difficult to gain access to the upper side of the coupling device in the mounted position of the coupling device on a trailer.

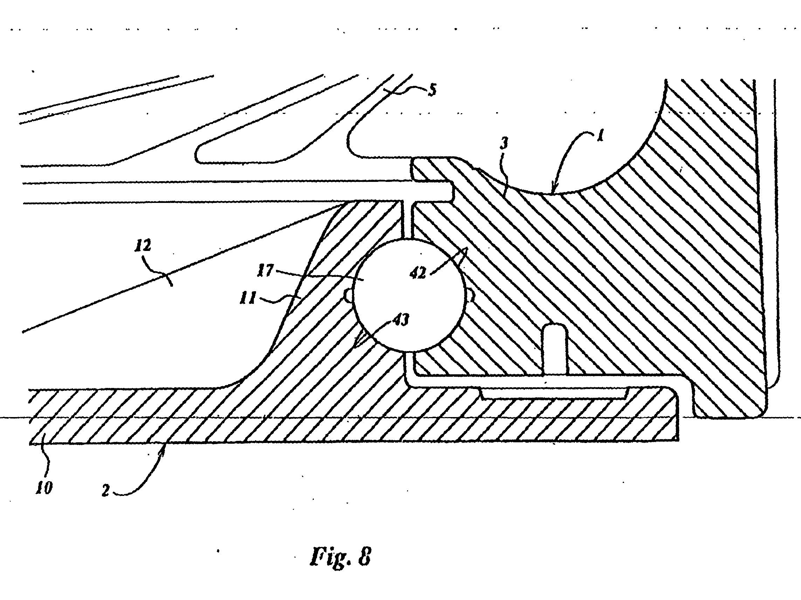

Figure 8 shows an alternative embodiment. In Figure 8 those parts that correspond to the parts used in the above-described embodiment are indicated by the same numerals as in the preceding figures.

In this embodiment grooves are formed in the frame 1 and in the upright collar 11 of coupling plate 2, whose boundary surfaces 42 and 43, respectively, are adapted to the shape of the balls 17, wherein said boundary surfaces function as bearing faces that mate with said balls.

Figure 9 shows another alternative embodiment, in this case including the sealing means that are required for sealing the area surrounding the circular chamber 60 that is defined by semicircular grooves 61, 62 in coupling plate 63 and frame 64, respectively. The sealing means are made up of a first sealing ring 65 and a second sealing ring 66. The two sealing rings 65, 66 extend in substantially rectangular circumferential grooves 67, 68 in frame 64. Coupling plate 63 is also provided with a relatively flat recess 69 for accommodating first sealing ring 65.

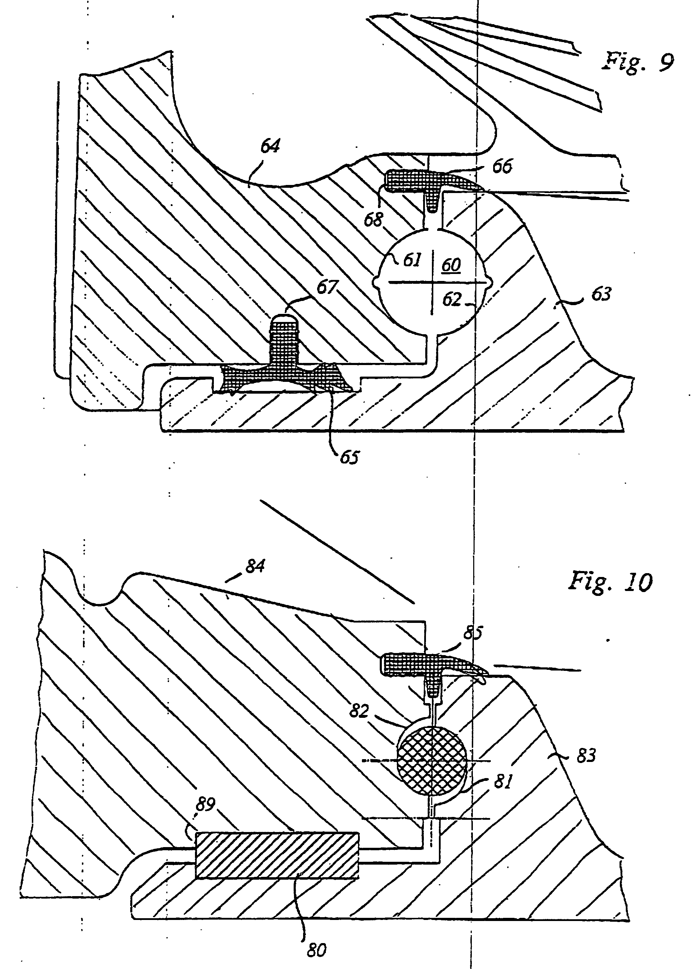

In yet another alternative embodiment, which is shown in Figure 10, a bearing ring 80 is used instead of sealing ring 65, which bearing ring is capable of bearing at least part of the vertical load on the coupling. Grooves 81, 82 in coupling plate 83 and frame 84, respectively, are disposed at vertically different positions with a view to compensating the inevitable wear on bearing ring 80 during use. The properties of sealing ring 85 are such that it will also retain its sealing characteristics after wear on bearing ring 80. A relatively flat recess 89 is formed not only in coupling plate 83, but also in frame 84 in this embodiment for the purpose of accommodating bearing ring 80. Both the sealing rings 65, 66, 85 and the bearing ring 80 in Figures 9 and 10 may be made of a suitable plastic material or another conductive material, such as bronze or glass fibre-containing material, wherein the upper side of bearing ring 80 may furthermore be provided with a wearing layer. Thanks to the bearing function of bearing ring 80, balls 90 will be loaded less heavily.

## Claims

1. A coupling device for a trailer having steerable wheels, wherein the coupling device includes a coupling plate (2), which is rotatable about the central axis of a coupling pin (18), which coupling plate (2) is supported by a frame (1) to be fixed to the trailer and which includes a driver element (23) intended for cooperation with a part of a tractive unit by means of which the trailer can be moved, in such a manner that the coupling plate (2) rotates along with the tractive unit upon rotation of the tractive unit and the trailer relative to each other about the central axis of the coupling pin (18), **characterized in that** the coupling plate (2) is provided near its circumference with a groove (13) that extends concentrically about the central axis of the coupling pin (18), which groove (13) is surrounded by a groove (7) formed in the frame (1), which extends concentrically about the central axis of the coupling pin (18), in such a manner that said grooves (7, 13) form a circumferential chamber, which accommodates balls (17) that connect the coupling plate (2) and the frame (1).

2. A coupling device according to claim 1, **characterized in that** said frame (1) is made of cast iron.

3. A coupling device according to claim 1 or 2, **characterized in that** said coupling plate (2) is made of cast iron.

4. A coupling device according to any one of the preceding claims, **characterized in that** at least two rings (16) made of a hard material are disposed in each groove (7, 13), which rings (16) form the contact surfaces for said balls (17).

5. A coupling device according to any one of the preceding claims, **characterized in that** a groove (7, 13) is bounded by two surfaces extending at least substantially perpendicularly to each other.

6. A coupling device according to any one of the preceding claims 1-3, **characterized in that** the boundary surfaces (42, 43) of the grooves (7, 13) form bearing faces that cooperate directly with the balls (17).

7. A coupling device according to any one of the preceding claims, **characterized in that** a circumferential bearing member (80) is present between the coupling plate (83) and the frame (84), seen in vertical direction.

8. A coupling device in particular according to any one of the preceding claims, wherein a stud (28) is fixed to the coupling plate (2) in a point some distance away from the central axis of the coupling pin (18), about which stud (28) an eye (35) that forms part of a steering mechanism for the steerable wheels is rotatable, **characterized in that** said stud (28) is fixed to the coupling plate (2) by means of a bolt (30), which is accessible from the underside of the coupling device when said coupling device is mounted on a trailer.

9. A coupling device according to claim 8, **characterized in that** said stud (28) is surrounded by a bush (29), which bush (29) has a bottom extending over said stud (28) on its side remote from the coupling plate (2), which bottom is provided with a threaded hole into which the threaded end of said bolt (30) is screwed.

10. A coupling device according to claim 8 or 9, **characterized in that** a bearing (33, 34) is mounted between the inner circumference of said eye (35) and the outer circumference of said bush (29).

11. A coupling device according to claim 10, **characterized in that** the space in the eye (35) that accommodates said stud (28) and said bush (29) is sealed on the side remote from the coupling plate by means of cover plate (38) that is fixed to said eye (35).

12. A coupling device according to any one of the preceding claims 8-11, **characterized in that** the space within the eye (35), which accommodates said stud (28) and said bush (29), is closed on the side facing towards the coupling plate by means of a bellows-shaped member (40), which extends between the eye (35) and the bush (29) surrounding the outer circumference of the stud (38).

## Patentansprüche

1. Kupplungsvorrichtung für einen Anhänger mit lenkbaren Rädern, wobei die Kupplungsvorrichtung eine Kupplungsplatte (2) beinhaltet, die um die Mittelachse eines Kupplungszapfens (18) drehbar ist, wobei die Kupplungsplatte (2) durch einen Rahmen (1) zu ihrer Befestigung am Anhänger gehalten ist und ein Antriebselement (23) beinhaltet, das zur Zusammenwirkung mit einem Teil eines Zugfahrzeugs bestimmt ist, mit Hilfe dessen der Anhänger bewegt werden kann, so daß sich die Kupplungsplatte (2) zusammen mit dem Zugfahrzeug bei Drehung des Zugfahrzeugs und des Anhängers im Verhältnis zueinander um die Mittelachse des Kupplungszapfens (18) dreht, **dadurch gekennzeichnet, daß** die Kupplungsplatte (2) in der Nähe ihres Umfangs mit einer Nut (13) versehen ist, die konzentrisch um die Mittelachse des Kupplungszapfens (18) verläuft, wobei die Nut (13) von einer Nut (7) umgeben ist, die in dem Rahmen (1) ausgebildet ist und konzentrisch so um die Mittelachse des Kupplungszapfens (18) verläuft, daß die Nute eine umfängliche Kammer ausbilden, welche Kugeln (17) aufnimmt, die die Kupplungsplatte (2) und den Rahmen (1) miteinander verbinden.

2. Kupplungsvorrichtung nach Anspruch 1, **dadurch gekennzeichnet, daß** der Rahmen (1) aus Gußeisen hergestellt ist.

3. Kupplungsvorrichtung nach Anspruch 1 oder 2, **dadurch gekennzeichnet, daß** die Kupplungsplatte (2) aus Gußeisen hergestellt ist.

4. Kupplungsvorrichtung nach einem der vorhergehenden Ansprüche, **dadurch gekennzeichnet, daß** zumindest zwei Ringe (16) aus hartem Material in jeder Nut (7, 13) angeordnet sind, wobei die Ringe (16) die Kontaktflächen für die Kugeln (17) bilden.

5. Kupplungsvorrichtung nach einem der vorhergehenden Ansprüche, **dadurch gekennzeichnet, daß** eine Nut (7, 13) durch zwei Flächen begrenzt ist, die zumindest im wesentlichen senkrecht zueinander verlaufen.

6. Kupplungsvorrichtung nach einem der vorhergehenden Ansprüche 1 - 3, **dadurch gekennzeichnet, daß** die Begrenzungsflächen (42, 43) der Nute (7, 13) Auflageflächen bilden, die direkt mit den Kugeln (17) zusammenwirken.

7. Kupplungsvorrichtung nach einem der vorhergehenden Ansprüche, **dadurch gekennzeichnet, daß** ein umfängliches Lagerglied (80) in vertikaler Richtung gesehen zwischen der Kupplungsplatte (83) und dem Rahmen (84) vorhanden ist.

8. Kupplungsvorrichtung insbesondere nach einem der vorhergehenden Ansprüche, wobei ein Ansatz (28) an der Kupplungsplatte (2) an einem Punkt in einiger Entfernung von der Mittelachse des Kupplungszapfens (18) befestigt ist, wobei um den Ansatz (28) eine Öse (35) drehbar ist, die einen Teil eines Lenkmechanismus für die lenkbaren Räder bildet, **dadurch gekennzeichnet, daß** der Ansatz (28) mittels eines Bolzens (30) an der Kupplungsplatte (2) befestigt ist, der von der Unterseite der Kupplungsvorrichtung zugänglich ist, wenn die Kupplungsvorrichtung an einem Anhänger angebracht ist.

9. Kupplungsvorrichtung nach Anspruch 8, **dadurch gekennzeichnet, daß** der Ansatz (28) von einer Hülse (29) umgeben ist, die eine Unterseite aufweist, welche sich über den Ansatz (28) auf seiner Seite, die entfernt von der Kupplungsplatte (2) angeordnet ist, erstreckt, wobei die Unterseite mit einem Gewindeloch versehen ist, in das das Gewindeende des Bolzens (30) geschraubt ist.

10. Kupplungsvorrichtung nach Anspruch 8 oder 9, **dadurch gekennzeichnet, daß** ein Lager (33, 34) zwischen dem inneren Umfang der Öse (35) und dem äußeren Umfang der Hülse (29) angebracht ist.

11. Kupplungsvorrichtung nach Anspruch 10, **dadurch gekennzeichnet, daß** der Raum in der Öse (35), der den Ansatz (28) und die Hülse (29) aufnimmt, an der Seite, die entfernt von der Kupplungsplatte angeordnet ist, mittels einer Abdeckplatte (38) abgedichtet ist, die an der Öse (35) befestigt ist.

12. Kupplungsvorrichtung nach einem der vorhergehenden Ansprüche 8 - 11, **dadurch gekennzeichnet, daß** der Raum in der Öse (35), der den Ansatz (28) und die Hülse (29) aufnimmt, an der Seite, die der Kupplungsplatte zugekehrt ist, mittels eines balgenförmigen Glieds (40) verschlossen ist, das sich zwischen der Öse (35) und der Hülse (29) erstreckt, die den äußeren Umfang des Ansatzes (28) umgibt.

## Revendications

1. Dispositif de couplage pour une remorque ayant des roues orientables, dans lequel le dispositif de couplage comprend une plaque de couplage (2), qui peut tourner autour de l'axe central d'une broche de couplage (18), laquelle plaque de couplage (2) est supportée par un châssis (1) à fixer à la remorque et qui comprend un élément pilote (23) prévu pour une coopération avec une partie d'un véhicule tracteur au moyen duquel la remorque peut être déplacée, de telle manière que la plaque de couplage (2) tourne conjointement avec le véhicule tracteur suite à la rotation du véhicule tracteur et de la remorque l'un par rapport à l'autre autour de l'axe central de la broche de couplage (18), **caractérisé en ce que** la plaque de couplage (2) est munie, près de sa circonférence, d'une rainure (13) qui s'étend de façon concentrique autour de l'axe central de la broche de couplage (18), laquelle rainure (13) est entourée d'une rainure (7) formée dans le châssis (1) qui s'étend de façon concentrique autour de l'axe central de la broche de couplage (18), de telle manière que lesdites rainures (7, 13) forment une chambre circonférentielle qui loge les billes (17) qui raccordent la plaque de couplage (2) et le châssis (1).

2. Dispositif de couplage selon la revendication 1, **caractérisé en ce que** ledit châssis (1) est réalisé en fonte.

3. Dispositif de couplage selon la revendication 1 ou la revendication 2, caractérisé en ce ladite plaque de couplage (2) est réalisée en fonte.

4. Dispositif de couplage selon l'une quelconque des revendications précédentes, **caractérisé en ce qu'**au moins deux anneaux (16) réalisés en un matériau dur sont disposés dans chaque rainure (7, 13), lesquels anneaux (16) forment les surfaces de contact pour lesdites billes (17).

5. Dispositif de couplage selon l'une quelconque des revendications précédentes, **caractérisé en ce qu'**une rainure (7, 13) est limitée par deux surfaces s'étendant au moins sensiblement perpendiculairement l'une à l'autre.

6. Dispositif de couplage selon l'une quelconque des revendications précédentes 1 à 3, **caractérisé en ce que** les surfaces de limite (42, 43) des rainures (7, 13) forment des surfaces de palier qui coopèrent directement avec les billes (17).

7. Dispositif de couplage selon l'une quelconque des revendications précédentes, **caractérisé en ce qu'**un élément de palier circonférentiel (80) est présent entre la plaque de couplage (83) et le châssis (84), vus dans la direction verticale.

8. Dispositif de couplage en particulier selon l'une quelconque des revendications précédentes, dans lequel un goujon (28) est fixé à la plaque de couplage (2) en un point à une certaine distance de l'axe central de la broche de couplage (18), goujon (28) autour duquel un oeil (35) qui forme une partie d'un mécanisme de direction pour les roues orientables peut tourner, **caractérisé en ce que** ledit goujon (28) est fixé à la plaque de couplage (2) au moyen d'un boulon (30) qui est accessible depuis le dessous du dispositif de couplage lorsque le dispositif de couplage est monté sur une remorque.

9. Dispositif de couplage selon la revendication 8, **caractérisé en ce que** ledit goujon (28) est entouré par une douille (29), laquelle douille (29) comprend un fond s'étendant par-dessus ledit goujon (28) sur son côté éloigné de la plaque de couplage (2), lequel fond est muni d'un trou fileté dans lequel l'extrémité filetée dudit boulon (30) est vissée.

10. Dispositif de couplage selon la revendication 8 ou la revendication 9, **caractérisé en ce qu'**un roulement (33, 34) est monté entre la circonférence interne dudit oeil (35) et la circonférence externe de ladite douille (29).

11. Dispositif de couplage selon la revendication 10, **caractérisé en ce que** l'espace dans l'oeil (35) qui loge ledit goujon (28) et ladite douille (29) est scellé sur le côté éloigné de la plaque de couplage au moyen d'une plaque de couverture (38) qui est fixée audit oeil (35).

12. Dispositif de couplage selon l'une quelconque des revendications précédentes 8 à 11, **caractérisé en ce que** l'espace à l'intérieur de l'oeil (35), qui loge ledit goujon (28) et ladite douille (29) est fermé sur le côté qui fait face à la plaque de couplage au moyen d'un élément en forme de soufflet (40) qui s'étend entre l'oeil (35) et la douille (29) entourant la circonférence externe du goujon (28).
